# FASCICULE DE BREVET EUROPEEN

(11) **EP 1 800 913 B1**
(45) Date de publication et mention de la délivrance du brevet: **16.03.2016**
(21) Numéro de dépôt: 06125491.8
(22) Date de dépôt: 06.12.2006
(51) Int. Cl.: B60C 23/04

(54) **Dispositif et méthode pour déterminer l'emplacement d'un pneumatique sur un véhicule**
Vorrichtung und Verfahren zur Bestimmung der Einbaustelle eines Reifens an einem Fahrzeug
Device and method for determining the location of a tyre on a vehicle

(30) Priorité: 21.12.2005 FR 0513344
(43) Date de publication de la demande: 27.06.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH); TRW Automotive U.S. LLC, Farmington Hills, MI 48335 (US)
(72) Inventeur: Penot, Thierry, 63000 Clermont-Ferrand (FR)
(74) Mandataire: Lasson, Cédric Y. M.

(56) Documents cités:
- EP-A- 1 669 221
- EP-A- 1 669 222
- WO-A-2004/110793

## Description

### Domaine de l'invention

La présente invention concerne les dispositifs et méthodes pour détecter l'emplacement d'un ensemble pneumatique-roue sur un véhicule, ainsi que les ensembles pneumatique-roue équipés de tels dispositifs. Le terme « pneumatique » désigne ici tous types de bandages élastiques, soumis en service à une pression interne ou non.

### Arrière-plan technologique

Ces dernières années ont vu un développement rapide de pneumatiques dits « intelligents », c'est-à-dire équipés de capteurs permettant de mesurer certains paramètres comme, par exemple, la pression de gonflage, la température du pneumatique ou des forces exercées sur le pneumatique en cours de roulage.

Une des difficultés liées à l'utilisation de tels pneumatiques réside dans leur localisation précise sur le véhicule. Si, par exemple, une perte de pression est détectée sur un pneumatique du véhicule, il est important de signaliser au conducteur quel pneumatique est concerné. Il faut donc assurer que l'unité centrale qui traite les données provenant des pneumatiques puisse identifier l'emplacement de chaque pneumatique sur le véhicule, et cela même après un éventuel changement de la position des pneumatiques sur le véhicule.

L'art antérieur décrit plusieurs méthodes permettant une telle identification. Il a notamment été proposé de pourvoir les pneumatiques d'identifiants (par exemple, à l'aide de la technologie RFID) et d'initialiser le système de traitement des données après chaque montage des pneumatiques, par l'entrée manuelle (par le moyen d'un clavier, d'un lecteur de code barre etc.) de la position de chaque pneumatique ainsi identifié. A titre d'exemple, une méthode connue enseigne d'activer, après montage des pneumatiques, un mode d'apprentissage où l'utilisateur doit déclencher l'envoi d'un signal d'un capteur de chaque pneumatique à l'unité centrale, dans un ordre prédéterminé.

Bien entendu, de telles méthodes ne permettent pas de s'affranchir du risque que l'utilisateur oublie d'effectuer l'initialisation après montage des pneumatiques ou qu'il se trompe dans l'identification manuelle de la position. Pour minimiser ce risque, des systèmes plus automatiques ont été proposés. Le document EP 760 299 divulgue une méthode consistant à déterminer le sens de rotation de chaque pneumatique, ce qui permet de distinguer les pneumatiques du côté gauche du véhicule de ceux qui sont montés sur le côté droit. Une autre approche a été décrite dans US 6 204 758 qui enseigne la détermination de la position de chaque pneumatique par la mesure d'accélérations : le signe de l'accélération permet de déterminer sur quel côté du véhicule le pneumatique est monté ; l'analyse de l'accélération de lacet permet de distinguer les roues directrices des roues non directrices.

La présente invention consiste à tirer avantage de la présence du champ magnétique terrestre dans la détermination du côté du véhicule sur lequel les pneumatiques sont montés. La présence de ce champ magnétique a déjà été exploitée dans des applications liées au pneumatique « intelligent » : ainsi, le document WO 2004/110793 enseigne l'utilisation du champ magnétique terrestre dans un compteur du nombre de révolutions d'un pneumatique ; une utilisation semblable est également décrite dans US 2005/0093539, et EP 1669221 (document selon l'article 54(3) CBE).

### Résumé de l'invention

La présente invention cherche à fournir une méthode d'identification de l'emplacement des pneumatiques ne nécessitant aucun « initiateur » sous forme de matériel additionnel disposé dans les passages des roues. Ce but est atteint par une méthode de d'identification d'au moins un ensemble pneumatique-roue monté sur un véhicule comportant les étapes suivantes :
- constater que le véhicule est en mouvement ;
- effectuer des mesures simultanées du champ magnétique terrestre à l'aide d'au moins deux bobines solidaires de la roue dudit ensemble pneumatique-roue, et fixées sur un côté prédéterminé de la roue par rapport au véhicule, les deux bobines étant disposées de manière à ce que les projections des axes des bobines dans un plan perpendiculaire à l'axe de rotation de l'ensemble pneumatique-roue, soient inclinées l'une par rapport à l'autre ;
- déterminer le déphasage des signaux mesurés ;
- déterminer le sens de mouvement du véhicule (avant ou arrière) ;
- déterminer, à partir du signe du déphasage et du sens de mouvement du véhicule, le côté du véhicule sur lequel se trouve l'ensemble pneumatique-roue.

Si le véhicule n'est pas en mouvement, la présente méthode ne peut pas trouver application.

La détermination du sens de mouvement du véhicule peut se faire avant, pendant ou après la mesure du champ magnétique terrestre. Elle peut être faite à partir des signaux mesurées par au moins une des bobines, car la périodicité du signal permet de déterminer la vitesse du véhicule : lorsque la vitesse atteint ou dépasse une certaine limite, on peut être certain que le véhicule se trouve en marche avant, les vitesses pouvant être atteintes en marche arrière étant inférieures à cette limite. Cette approche a l'avantage de la plus grande simplicité.

Le sens de mouvement du véhicule peut également être obtenu sur la base d'informations mises à disposition par d'autres unités du véhicule, par exemple par un bus de communication, de type bus CAN ou autre. A titre d'exemple, si la vitesse du véhicule est disponible sous forme d'un nombre signé, on peut déterminer le sens de mouvement à partir du signe de ce nombre.

Par « mesure du champ magnétique » il faut entendre ici la mesure de la tension induite dans une bobine traversée par un flux magnétique créé par un champ magnétique.

Un «côté prédéterminé de la roue par rapport au véhicule» est, soit le côté extérieur de la roue par rapport au véhicule (c'est-à-dire le côté le plus éloigné de la roue opposée du même essieu), soit le côté intérieur de la roue par rapport au véhicule (c'est-à-dire le côté le plus proche de la roue opposée du même essieu, qui correspond en général au côté de la fixation de la roue au véhicule). Dans le cas de roues jumelées, on raisonne de façon analogue, en considérant le côté le plus éloigné ou le plus proche d'une des roues de la paire de roues opposée du même essieu.

Le fait de comparer les signaux provenant d'au moins deux bobines distinctes permet de s'affranchir d'effets liés à l'orientation du véhicule dans le champ magnétique terrestre, de la latitude géographique, de parasites électromagnétiques etc.

Il est décisif pour la présente méthode que les bobines soient systématiquement fixées au même côté de la roue par rapport au véhicule. Pour éviter toute erreur, il est avantageux de se repérer par rapport à un élément de la roue qui se situe toujours du même côté de la roue par rapport au véhicule. Ceci est particulièrement simple dans le cas d'un pneumatique qui est soumis en service à une pression interne. Dans un ensemble pneumatique-roue comportant un tel pneumatique, une valve de gonflage est prévue sur la roue et cette valve est en général montée sur le côté extérieur par rapport au véhicule, de façon à permettre un accès facile à la valve. Selon l'invention, les bobines sont fixées sur un côté extérieur de la roue par rapport au véhicule et solidaires de la valve du pneumatique dudit ensemble pneumatique-roue. Il est également possible de fixer les bobines systématiquement au côté de la roue qui est opposé au côté sur lequel se trouve la valve.

L'invention concerne également un dispositif pour identifier l'emplacement d'un ensemble pneumatique-roue monté sur un véhicule, ce dispositif étant destiné à être fixé sur ledit ensemble et comportant au moins deux bobines aptes à mesurer le champ magnétique terrestre, les deux bobines étant disposées de manière à ce que, lorsque le dispositif est fixé sur ledit ensemble, les projections des axes des bobines dans un plan perpendiculaire à l'axe de rotation dudit ensemble, soient inclinées l'une par rapport à l'autre. Bien entendu, les bobines ne doivent pas avoir leur axe orienté dans le sens de l'axe de rotation de l'ensemble pneumatique-roue. Selon l'invention, le dispositif est destiné à être solidarisé avec une valve de gonflage de l'ensemble pneumatique-roue.

Enfin, l'invention concerne un ensemble pneumatique-roue équipé d'un tel dispositif.

### Brève description des dessins

L'invention sera mieux comprise grâce à la description des dessins selon lesquels :
- la figure 1 représente schématiquement une vue en perspective d'une roue de l'art antérieur, équipé d'un système de capteurs solidaire de la valve de gonflage ;
- la figure 2 représente schématiquement une vue en coupe d'un ensemble pneumatique-roue de l'art antérieur équipé d'un système de capteurs solidaire de la valve de gonflage ;
- la figure 3 représente schématiquement une vue en perspective d'une valve de gonflage et d'un boîtier solidaire de la valve destiné à accueillir des capteurs ;
- la figure 4 représente schématiquement une vue de dessus d'un véhicule équipé de dispositifs selon l'invention ;
- la figure 5 représente schématiquement une vue de côté d'un ensemble pneumatique-roue équipé d'un dispositif selon l'invention, monté sur le côté droit d'un véhicule ;
- la figure 6 représente schématiquement une vue de côté d'un ensemble pneumatique-roue équipé d'un dispositif selon l'invention, monté sur le côté gauche d'un véhicule ;
- la figure 7 représente les signaux obtenus sur un véhicule dont les pneumatiques sont équipés d'un dispositif selon l'invention, avant et après traitement numérique.

Ces figures sont données dans un but purement illustratif et n'ont bien sur aucun caractère limitatif.

### Description de modes de réalisation

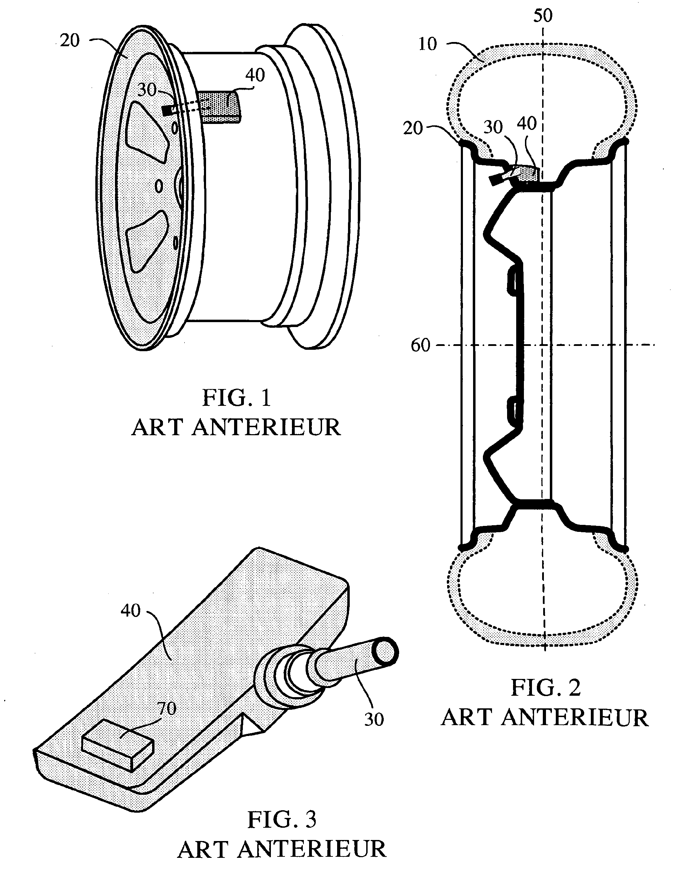

La figure 1 représente une vue en perspective d'une roue 20 de l'art antérieur, équipée d'une valve de gonflage 30 et d'un boîtier 40 prévu pour recevoir des capteurs. Dans un souci de clarté, le pneumatique 10 n'est pas représenté.

La figure 2 représente une vue en coupe d'un autre ensemble pneumatique-roue de l'art antérieur, formé par un pneumatique 10 et une roue 20 et équipé d'une valve de gonflage 30 et d'un boîtier 40 prévu pour recevoir des capteurs. La trace du plan médian 50 du pneumatique et celle de l'axe de rotation 60 de l'ensemble pneumatique roue sont également représentées.

La figure 3 représente schématiquement une vue en perspective d'une valve de gonflage 30 et d'un boîtier 40 solidaire de la valve et destiné à accueillir des capteurs ; un tel boîtier est connu, par exemple, de EP 1 106 397. Il peut être adapté pour recevoir un dispositif 70 selon l'invention.

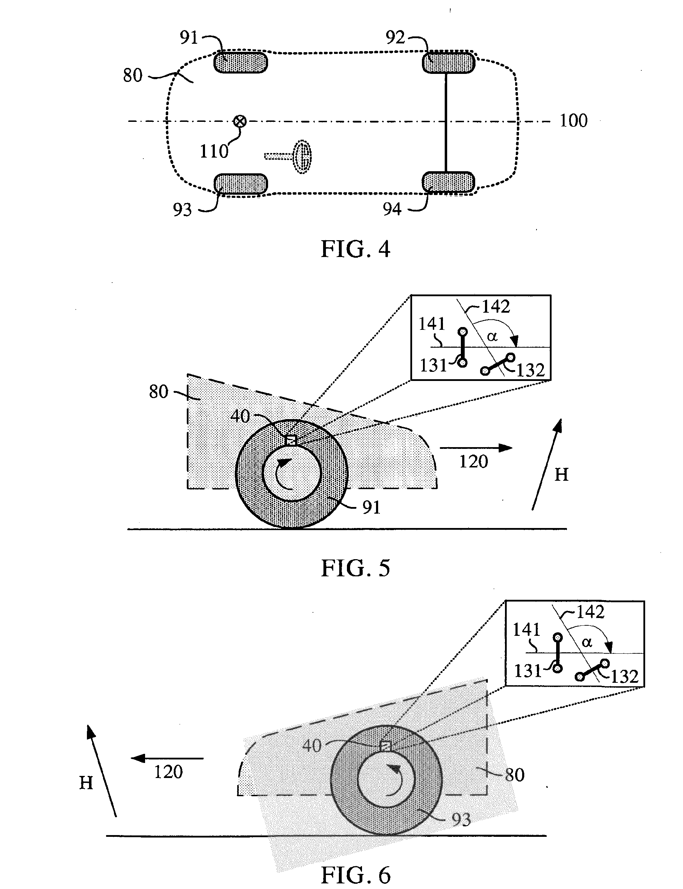

La figure 4 représente schématiquement une vue de dessus d'un véhicule 80 dont les ensembles pneumatique-roue 91 à 94 sont équipés de dispositifs selon l'invention comportant deux bobines aptes à mesurer le champ magnétique terrestre, les deux bobines étant disposées de manière à ce que, lorsque le dispositif est fixé sur ledit ensemble, les projections des axes des bobines dans un plan perpendiculaire à l'axe de rotation dudit ensemble, soient inclinées l'une par rapport à l'autre.

Le transfert d'un ensemble pneumatique-roue du côté gauche au côté droit du véhicule en gardant le même côté de l'ensemble à l'extérieur par rapport au véhicule, s'analyse comme une rotation, éventuellement suivie d'une translation. Ainsi, si l'on remplace l'ensemble 91 ou l'ensemble 92 par l'ensemble 93, ce dernier est tourné de 180° autour d'un axe 110 perpendiculaire au sol (pour atteindre la position de l'ensemble 91) puis décalé en translation (si la position 92 est visée). La disposition particulière des bobines a pour conséquence de réduire la symétrie rotatoire du dispositif, de sorte que la configuration relative des bobines est différente d'un côté du véhicule à l'autre. Même la rotation de l'ensemble pneumatique-roue autour de son axe de rotation en cours de roulage ne permet pas d'obtenir la même configuration relative des bobines sur les deux côtés du véhicule. Cette configuration relative est donc caractéristique de chaque côté du véhicule.

Ce constat fondamental est illustré aux figures 5 et 6 qui représentent des vues de côté d'ensembles pneumatique-roue équipés d'un dispositif selon l'invention, monté sur le côté droit (figure 5) et gauche (figure 6) du véhicule.

La figure 5 représente un ensemble pneumatique-roue 91 monté sur la position avant du côté droit du véhicule 80 qui avance dans la direction 120, indiquée par une flèche. Un dispositif selon l'invention est monté dans un boîtier 40 et fixé sur l'ensemble 91. Le dispositif comporte deux bobines 131 et 132 aptes à mesurer le champ magnétique terrestre H, les deux bobines 131 et 132 étant disposées de manière à ce que les projections des axes 141 et 142 des bobines 131 et 132 dans un plan perpendiculaire à l'axe de rotation dudit ensemble, sont inclinées l'une par rapport à l'autre d'un angle alpha (α) différent de zéro ou de 180°.

La figure 6 représente un ensemble pneumatique-roue 93 monté sur la position avant du côté gauche du véhicule 80 qui avance dans la direction 120. Le même dispositif selon l'invention est monté dans un boîtier 40 et fixé de la même façon sur l'ensemble 93.

La comparaison des figures 5 et 6 permet de comprendre le fonctionnement de la méthode selon l'invention. Lorsque l'ensemble pourvu du dispositif est monté sur le côté droit du véhicule (cas de la figure 5) et lorsque le véhicule avance, la bobine 132 est toujours en avance de phase sur la bobine 131 : il faut que l'ensemble pneumatique-roue effectue une rotation d'un certain angle autour de son axe de rotation pour que la bobine 131 se trouve dans la même position par rapport au champ magnétique terrestre que la bobine 132 initialement. La situation est inversée pour un ensemble pourvu du dispositif monté sur le côté gauche du véhicule (cas de la figure 6) : ici, c'est la bobine 131 qui est en avance de phase sur la bobine 132. Il suffit donc de déterminer le déphasage relatif des signaux mesurés par les deux bobines pour connaître, pour une direction de mouvement donnée (avant ou arrière) du véhicule, le côté du véhicule sur lequel se trouvent les bobines.

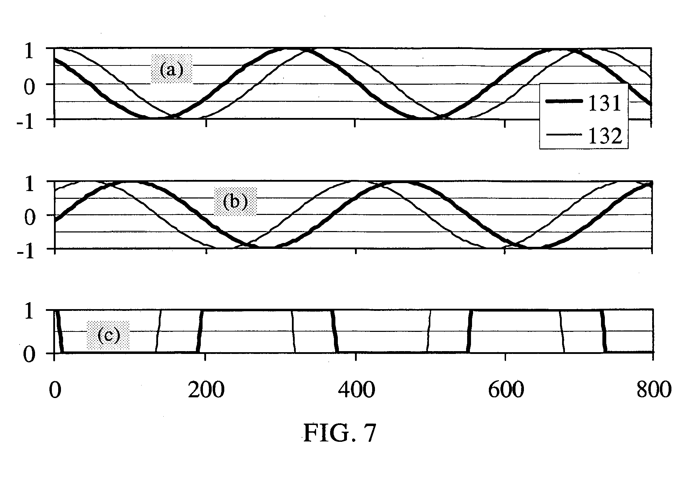

La figure 7 représente les signaux correspondants en fonction de l'angle de rotation de l'ensemble pneumatique-roue (en degrés). Chaque bobine produit un signal sinusoïdal dont la périodicité est celle de la rotation de l'ensemble pneumatique-roue ; la fréquence dépend donc de la vitesse du véhicule. Les valeurs extrêmes sont atteintes lorsque le champ magnétique terrestre est aligné avec l'axe de la bobine correspondante. L'amplitude du signal est liée au positionnement terrestre du véhicule. Le déphasage est lié à l'angle alpha (α) de l'inclinaison relative des deux bobines. La figure 7(a) montre les signaux obtenus par l'ensemble pneumatique-roue représenté à la figure 6 : le signal correspondant à la bobine 132 est en retard de phase par rapport à celui correspondant à la bobine 131. La situation est inversée à la figure 7(b) qui correspond à l'ensemble pneumatique-roue de la figure 5 où le signal de la bobine 132 est en avance de phase par rapport au signal de la bobine 131. Pour un sens de mouvement donné, il est donc possible de déterminer le côté sur lequel se trouve l'ensemble pneumatique-roue à partir du déphasage relatif des signaux mesurés par les deux bobines (ou, en d'autres termes, à partir du signe du déphasage des signaux).

Il peut être avantageux de transformer les signaux mesurés en signaux carrés, à l'aide d'un traitement simple (seuil, comparateur), comme cela est représenté à la figure 7(c) qui correspond au signal de la figure 7(b). Il suffit ensuite de détecter le positionnement de front de chacun des deux signaux.

L'information est transmise par radio à une unité centrale embarquée dans le véhicule.

Bien entendu, le principe de l'invention ne peut être exploité de façon fiable dans une méthode pour la détermination de l'emplacement d'un ensemble pneumatique-roue que si le dispositif selon l'invention est fixé sur le même côté de l'ensemble pneumatique-roue par rapport au véhicule pour tous les ensembles 91 à 94 dont le positionnement doit être déterminé. Il importe peu que ce soit toujours le côté extérieur ou toujours le côté intérieur par rapport au véhicule, pourvu que ce soit systématiquement le même côté. La fixation du dispositif sur une valve de gonflage constitue une façon particulièrement simple d'assurer que tous les dispositifs se trouvent sur le côté extérieur par rapport au véhicule.

Il ressort de la description de l'invention que la direction du mouvement est un paramètre important pour identifier l'emplacement des ensembles pneumatique-roue : une inversion de la direction entraîne une inversion du déphasage des signaux des deux bobines 131 et 132. La détermination de la direction du mouvement peut se faire à l'aide d'un dispositif connu (comme par exemple, le dispositif à billes de EP 0 760 299), à l'aide de signaux existants dans le véhicule (alimentation des feux de recul) ou encore à partir de la vitesse du véhicule (qui peut être déterminée à partir de la fréquence du signaux mesurées par chacune des deux bobines 131 et 132) : en désactivant la détermination de l'emplacement lorsque la vitesse est inférieure à une certaine limite (par exemple, 30 km/h), on est certain que le véhicule avance lorsque la détermination est effectuée.

La méthode décrite dans ce document ne permet que la détermination du côté du véhicule sur lequel se trouve un ensemble pneumatique-roue. Si la position précise (avant ou arrière du véhicule) doit être déterminée, la méthode doit être complétée par une l'une quelconque des méthodes connues permettant de discriminer entre les positions avant et arrière.

## Revendications (Revendications pour l'(les) Etat(s) contractant(s) suivant(s): DE, ES, GB, IT)

1. Méthode d'identification de l'emplacement d'au moins un ensemble pneumatique-roue (91-94) monté sur un véhicule (80), comportant les étapes :
- constater que le véhicule est en mouvement ;
- effectuer des mesures simultanées du champ magnétique terrestre (H) à l'aide d'au moins deux bobines (131, 132) solidaires de la roue (20) dudit ensemble pneumatique-roue, et fixées sur un côté prédéterminé de la roue par rapport au véhicule, les deux bobines étant disposées de manière à ce que les projections des axes (141, 142) des bobines dans un plan perpendiculaire à l'axe de rotation (60) de l'ensemble pneumatique-roue, soient inclinées l'une par rapport à l'autre ;
- déterminer le déphasage des signaux mesurés ;
- déterminer le sens de mouvement (120) du véhicule (avant ou arrière) ;
- déterminer, à partir du signe du déphasage et du sens de mouvement du véhicule, le côté du véhicule sur lequel se trouve l'ensemble pneumatique-roue,
**caractérisée en ce que** l'ensemble pneumatique-roue comporte une valve de gonflage (30) du pneumatique (10) et **en ce que** les bobines (131, 132) sont fixées sur le côté extérieur de la roue (20) par rapport au véhicule (80) et solidaires de la valve du pneumatique dudit ensemble pneumatique-roue.

2. Méthode selon la revendication 1, **caractérisée en ce que** la détermination du sens de mouvement (120) du véhicule est effectuée à partir des signaux mesurés par au moins une des bobines (131, 132).

3. Méthode selon la revendication 2, **caractérisée en ce que** la détermination du sens de mouvement (120) du véhicule est effectuée à partir de la périodicité des signaux mesurés par au moins une des bobines, lorsque la fréquence des signaux atteint des valeurs qui ne peuvent être atteintes qu'en marche avant.

4. Méthode selon la revendication 1, **caractérisée en ce que** le sens de mouvement (120) du véhicule est déterminé sur la base d'informations mises à disposition par d'autres unités du véhicule, tel un bus de communication.

5. Méthode selon la revendication 4, **caractérisée en ce que** l'information mise à disposition est un nombre signé correspondant à la vitesse du véhicule.

6. Dispositif pour identifier l'emplacement d'un ensemble pneumatique-roue monté sur un véhicule (80), ce dispositif étant destiné à être fixé sur ledit ensemble et comportant au moins deux bobines (131, 132) aptes à mesurer le champ magnétique terrestre (H), les deux bobines étant disposées de manière à ce que, lorsque le dispositif est fixé sur ledit ensemble, les projections des axes (141, 142) des bobines dans un plan perpendiculaire à l'axe de rotation (60) dudit ensemble, soient inclinées l'une par rapport à l'autre, **caractérisé en ce qu'**il est destiné à être fixé sur une valve de gonflage (30) de l'ensemble pneumatique-roue.

7. Ensemble pneumatique-roue **caractérisé en ce qu'**il est équipé d'un dispositif selon la revendication 6.

## Revendications (Revendications pour l'(les) Etat(s) contractant(s) suivant(s): AT, BE, BG, CH, CY, CZ, DK, EE, FI, FR, GR, HU, IE, IS, LI, LT, LL4, LV, MC, NL, PL, PT, MO, SE, SI, SK, TR)

1. Méthode d'identification de l'emplacement d'au moins un ensemble pneumatique-roue (91-94) monté sur un véhicule (80), comportant les étapes :
- constater que le véhicule est en mouvement ;
- effectuer des mesures simultanées du champ magnétique terrestre (H) à l'aide d'au moins deux bobines (131, 132) solidaires de la roue (20) dudit ensemble pneumatique-roue, et fixées sur un côté prédéterminé de la roue par rapport au véhicule, les deux bobines étant disposées de manière à ce que les projections des axes (141, 142) des bobines dans un plan perpendiculaire à l'axe de rotation (60) de l'ensemble pneumatique-roue, soient inclinées l'une par rapport à l'autre ;
- déterminer le déphasage des signaux mesurés ;
- déterminer le sens de mouvement (120) du véhicule (avant ou arrière) ;
- déterminer, à partir du signe du déphasage et du sens de mouvement du véhicule, le côté du véhicule sur lequel se trouve l'ensemble pneumatique-roue.

2. Méthode selon la revendication 1, **caractérisée en ce que** la détermination du sens de mouvement (120) du véhicule est effectuée à partir des signaux mesurés par au moins une des bobines (131, 132).

3. Méthode selon la revendication 2, **caractérisée en ce que** la détermination du sens de mouvement (120) du véhicule est effectuée à partir de la périodicité des signaux mesurés par au moins une des bobines, lorsque la fréquence des signaux atteint des valeurs qui ne peuvent être atteintes qu'en marche avant.

4. Méthode selon la revendication 1, **caractérisée en ce que** le sens de mouvement (120) du véhicule est déterminé sur la base d'informations mises à disposition par d'autres unités du véhicule, tel un bus de communication.

5. Méthode selon la revendication 4, **caractérisée en ce que** l'information mise à disposition est un nombre signé correspondant à la vitesse du véhicule.

6. Méthode selon l'une quelconque des revendications précédentes, **caractérisée en ce que** l'ensemble pneumatique-roue comporte une valve de gonflage (30) du pneumatique (10) et **en ce que** les bobines (131, 132) sont fixées sur le côté extérieur de la roue (20) par rapport au véhicule (80) et solidaires de la valve du pneumatique dudit ensemble pneumatique-roue.

7. Dispositif pour identifier l'emplacement d'un ensemble pneumatique-roue monté sur un véhicule (80), ce dispositif étant destiné à être fixé sur ledit ensemble et comportant au moins deux bobines (131, 132) aptes à mesurer le champ magnétique terrestre (H), les deux bobines étant disposées de manière à ce que, lorsque le dispositif est fixé sur ledit ensemble, les projections des axes (141, 142) des bobines dans un plan perpendiculaire à l'axe de rotation (60) dudit ensemble, soient inclinées l'une par rapport à l'autre.

8. Dispositif selon la revendication 7, **caractérisé en ce qu'**il est destiné à être fixé sur une valve de gonflage (30) de l'ensemble pneumatique-roue.

9. Ensemble pneumatique-roue **caractérisé en ce qu'**il est équipé d'un dispositif selon la revendication 7 ou 8.

## Patentansprüche (Patentansprüche für folgende(n) Vertragsstaat(en): DE, ES, GB, IT)

1. Verfahren zur Identifikation der Stelle mindestens einer Reifen-Rad-Baugruppe (91-94), die an einem Fahrzeug (80) montiert ist, mit den folgenden Schritten:
- Feststellen, dass das Fahrzeug in Bewegung ist;
- Durchführen von gleichzeitigen Messungen des Erdmagnetfeldes (H) mit Hilfe von mindestens zwei Spulen (131, 132), die mit dem Rad (20) der Reifen-Rad-Baugruppe fest verbunden sind, und auf einer vorbestimmten Seite des Rades in Bezug auf das Fahrzeug befestigt sind, wobei die zwei Spulen so angeordnet sind, dass die Projektionen der Achsen (141, 142) der Spulen in einer zur Drehachse (60) der Reifen-Rad-Baugruppe senkrechten Ebene in Bezug aufeinander geneigt sind;
- Bestimmen der Phasenverschiebung der gemessenen Signale;
- Bestimmen der Bewegungsrichtung (120) des Fahrzeugs (vorwärts oder rückwärts);
- Bestimmen der Seite des Fahrzeugs, an der sich die Reifen-Rad-Baugruppe befindet, anhand des Vorzeichens der Phasenverschiebung und der Bewegungsrichtung des Fahrzeugs,
**dadurch gekennzeichnet, dass** die Reifen-Rad-Baugruppe ein Aufblasventil (30) des Reifens (10) umfasst und dass die Spulen (131, 132) auf der Außenseite des Rades (20) in Bezug auf das Fahrzeug (80) befestigt sind und mit dem Ventil des Reifens der Reifen-Rad-Baugruppe fest verbunden sind.

2. Verfahren nach Anspruch 1, **dadurch gekennzeichnet, dass** die Bestimmung der Bewegungsrichtung (120) des Fahrzeugs anhand von Signalen durchgeführt wird, die von mindestens einer der Spulen (131, 132) gemessen werden.

3. Verfahren nach Anspruch 2, **dadurch gekennzeichnet, dass** die Bestimmung der Bewegungsrichtung (120) des Fahrzeugs anhand der Periodizität der durch mindestens eine der Spulen gemessenen Signale durchgeführt wird, wenn die Frequenz der Signale Werte erreicht, die nur bei der Vorwärtsfahrt erreicht werden können.

4. Verfahren nach Anspruch 1, **dadurch gekennzeichnet, dass** die Bewegungsrichtung (120) des Fahrzeugs auf der Basis von Informationen bestimmt wird, die durch andere Einheiten des Fahrzeugs, wie einen Kommunikationsbus, zur Verfügung gestellt werden.

5. Verfahren nach Anspruch 4, **dadurch gekennzeichnet, dass** die zur Verfügung gestellten Informationen eine mit Vorzeichen versehene Zahl sind, die der Geschwindigkeit des Fahrzeugs entspricht.

6. Vorrichtung zum Identifizieren der Stelle einer Reifen-Rad-Baugruppe, die an einem Fahrzeug (80) montiert ist, wobei diese Vorrichtung an der Baugruppe befestigt werden soll und mindestens zwei Spulen (131, 132) umfasst, die das Erdmagnetfeld (H) messen können, wobei die zwei Spulen so angeordnet sind, dass, wenn die Vorrichtung an der Baugruppe befestigt ist, die Projektionen der Achsen (141, 142) der Spulen in einer zur Drehachse (60) der Baugruppe senkrechten Ebene in Bezug aufeinander geneigt sind, **dadurch gekennzeichnet, dass** sie an einem Aufblasventil (30) der Reifen-Rad-Baugruppe befestigt werden soll.

7. Reifen-Rad-Baugruppe, **dadurch gekennzeichnet, dass** sie mit einer Vorrichtung nach Anspruch 6 ausgestattet ist.

## Patentansprüche (Patentansprüche für folgende(n) Vertragsstaat(en): AT, BE, BG, CH, CY, CZ, DK, EE, FI, FR, GR, HU, IE, IS, LI, LT, LL4, LV, MC, NL, PL, PT, MO, SE, SI, SK, TR)

1. Verfahren zur Identifikation der Stelle mindestens einer Reifen-Rad-Baugruppe (91-94), die an einem Fahrzeug (80) montiert ist, mit den folgenden Schritten:
- Feststellen, dass das Fahrzeug in Bewegung ist;
- Durchführen von gleichzeitigen Messungen des Erdmagnetfeldes (H) mit Hilfe von mindestens zwei Spulen (131, 132), die mit dem Rad (20) der Reifen-Rad-Baugruppe fest verbunden sind, und auf einer vorbestimmten Seite des Rades in Bezug auf das Fahrzeug befestigt sind, wobei die zwei Spulen so angeordnet sind, dass die Projektionen der Achsen (141, 142) der Spulen in einer zur Drehachse (60) der Reifen-Rad-Baugruppe senkrechten Ebene in Bezug aufeinander geneigt sind;
- Bestimmen der Phasenverschiebung der gemessenen Signale;
- Bestimmen der Bewegungsrichtung (120) des Fahrzeugs (vorwärts oder rückwärts);
- Bestimmen der Seite des Fahrzeugs, an der sich die Reifen-Rad-Baugruppe befindet, anhand des Vorzeichens der Phasenverschiebung und der Bewegungsrichtung des Fahrzeugs.

2. Verfahren nach Anspruch 1, **dadurch gekennzeichnet, dass** die Bestimmung der Bewegungsrichtung (120) des Fahrzeugs anhand von Signalen durchgeführt wird, die von mindestens einer der Spulen (131, 132) gemessen werden.

3. Verfahren nach Anspruch 2, **dadurch gekennzeichnet, dass** die Bestimmung der Bewegungsrichtung (120) des Fahrzeugs anhand der Periodizität der durch mindestens eine der Spulen gemessenen Signale durchgeführt wird, wenn die Frequenz der Signale Werte erreicht, die nur bei der Vorwärtsfahrt erreicht werden können.

4. Verfahren nach Anspruch 1, **dadurch gekennzeichnet, dass** die Bewegungsrichtung (120) des Fahrzeugs auf der Basis von Informationen bestimmt wird, die durch andere Einheiten des Fahrzeugs, wie einen Kommunikationsbus, zur Verfügung gestellt werden.

5. Verfahren nach Anspruch 4, **dadurch gekennzeichnet, dass** die zur Verfügung gestellten Informationen eine mit Vorzeichen versehene Zahl sind, die der Geschwindigkeit des Fahrzeugs entspricht.

6. Verfahren nach einem der vorangehenden Ansprüche, **dadurch gekennzeichnet, dass** die Reifen-Rad-Baugruppe ein Aufblasventil (30) des Reifens (10) umfasst und dass die Spulen (131, 132) auf der Außenseite des Rades (20) in Bezug auf das Fahrzeug (80) befestigt sind und mit dem Ventil des Reifens der Reifen-Rad-Baugruppe fest verbunden sind.

7. Vorrichtung zum Identifizieren der Stelle einer Reifen-Rad-Baugruppe, die an einem Fahrzeug (80) montiert ist, wobei diese Vorrichtung an der Baugruppe befestigt werden soll und mindestens zwei Spulen (131, 132) umfasst, die das Erdmagnetfeld (H) messen können, wobei die zwei Spulen so angeordnet sind, dass, wenn die Vorrichtung an der Baugruppe befestigt ist, die Projektionen der Achsen (141, 142) der Spulen in einer zur Drehachse (60) der Baugruppe senkrechten Ebene in Bezug aufeinander geneigt sind.

8. Vorrichtung nach Anspruch 7, **dadurch gekennzeichnet, dass** sie an einem Aufblasventil (30) der Reifen-Rad-Baugruppe befestigt werden soll.

9. Reifen-Rad-Baugruppe, **dadurch gekennzeichnet, dass** sie mit einer Vorrichtung nach Anspruch 7 oder 8 ausgestattet ist.

## Claims (Claims for the following Contracting State(s): DE, ES, GB, IT)

1. A method of identifying the location of at least one tyre/wheel assembly (91-94) mounted on a vehicle (80), comprising the steps:
- noting that the vehicle is moving;
- carrying out simultaneous measurements of the Earth's magnetic field (H) using at least two coils (131, 132) which are integral with the wheel (20) of said tyre/wheel assembly, and are fastened to a predetermined side of the wheel relative to the vehicle, the two coils being arranged such that the projections of the axes (141, 142) of the coils in a plane perpendicular to the axis of rotation (60) of the tyre/wheel assembly are inclined relative to one another;
- determining the phase difference of the measured signals;
- determining the direction of movement (120) of the vehicle (forwards or backwards);
- determining, from the sign of the phase difference and the direction of movement of the vehicle, the side of the vehicle on which the tyre/wheel assembly is located,
**characterised in that** the tyre/wheel assembly comprises an inflation valve (30) of the tyre (10) and **in that** the coils (131, 132) are fastened to the outer side of the wheel (20) relative to the vehicle (80) and are integral with the valve of the tyre of said tyre/wheel assembly.

2. A method according to Claim 1, **characterised in that** the direction of movement (120) of the vehicle is determined from signals measured by at least one of the coils (131, 132).

3. A method according to Claim 2, **characterised in that** the direction of movement (120) of the vehicle is determined from the periodicity of the signals measured by at least one of the coils, when the frequency of the signals reaches values which can only be obtained when travelling forwards.

4. A method according to Claim 1, **characterised in that** the direction of movement (120) of the vehicle is determined on the basis of information provided by other units of the vehicle, such as a communication bus.

5. A method according to Claim 4, **characterised in that** the information provided is a signed number corresponding to the speed of the vehicle.

6. A device for identifying the location of a tyre/wheel assembly mounted on a vehicle (80), this device being intended to be fastened to said assembly and comprising at least two coils (131, 132) capable of measuring the Earth's magnetic field (H), the two coils being arranged such that, when the device is fastened to said assembly, the projections of the axes (141, 142) of the coils in a plane perpendicular to the axis of rotation (60) of said assembly are inclined relative to one another, **characterised in that** it is intended to be fastened to an inflation valve (30) of the tyre/wheel assembly.

7. A tyre/wheel assembly, **characterised in that** it is fitted with a device according to Claim 6.

## Claims (Claims for the following Contracting State(s): AT, BE, BG, CH, CY, CZ, DK, EE, FI, FR, GR, HU, IE, IS, LI, LT, LL4, LV, MC, NL, PL, PT, MO, SE, SI, SK, TR)

1. A method of identifying the location of at least one tyre/wheel assembly (91-94) mounted on a vehicle (80), comprising the steps:
- noting that the vehicle is moving;
- carrying out simultaneous measurements of the Earth's magnetic field (H) using at least two coils (131, 132) which are integral with the wheel (20) of said tyre/wheel assembly, and are fastened to a predetermined side of the wheel relative to the vehicle, the two coils being arranged such that the projections of the axes (141, 142) of the coils in a plane perpendicular to the axis of rotation (60) of the tyre/wheel assembly are inclined relative to one another;
- determining the phase difference of the measured signals;
- determining the direction of movement (120) of the vehicle (forwards or backwards);
- determining, from the sign of the phase difference and the direction of movement of the vehicle, the side of the vehicle on which the tyre/wheel assembly is located.

2. A method according to Claim 1, **characterised in that** the direction of movement (120) of the vehicle is determined from signals measured by at least one of the coils (131, 132).

3. A method according to Claim 2, **characterised in that** the direction of movement (120) of the vehicle is determined from the periodicity of the signals measured by at least one of the coils, when the frequency of the signals reaches values which can only be obtained when travelling forwards.

4. A method according to Claim 1, **characterised in that** the direction of movement (120) of the vehicle is determined on the basis of information provided by other units of the vehicle, such as a communication bus.

5. A method according to Claim 4, **characterised in that** the information provided is a signed number corresponding to the speed of the vehicle.

6. A method according to any one of the preceding claims, **characterised in that** the tyre/wheel assembly comprises an inflation valve (30) of the tyre (10) and **in that** the coils (131, 132) are fastened to the outer side of the wheel (20) relative to the vehicle (80) and are integral with the valve of the tyre of said tyre/wheel assembly.

7. A device for identifying the location of a tyre/wheel assembly mounted on a vehicle (80), this device being intended to be fastened to said assembly and comprising at least two coils (131, 132) capable of measuring the Earth's magnetic field (H), the two coils being arranged such that, when the device is fastened to said assembly, the projections of the axes (141, 142) of the coils in a plane perpendicular to the axis of rotation (60) of said assembly are inclined relative to one another.

8. A device according to Claim 7, **characterised in that** it is intended to be fastened to an inflation valve (30) of the tyre/wheel assembly.

9. A tyre/wheel assembly, **characterised in that** it is fitted with a device according to Claim 7 or 8.
